# EUROPÄISCHE PATENTSCHRIFT

(11) **EP 1 569 827 B1**
(45) Veröffentlichungstag und Bekanntmachung des Hinweises auf die Patenterteilung: **23.06.2010**
(21) Anmeldenummer: 03778242.2
(22) Anmeldetag: 27.10.2003
(51) Int. Cl.: B60R 21/34

(54) **SCHARNIER ZUR ANBINDUNG EINER KLAPPE, INSBESONDERE EINER MOTORHAUBE, AN EINEN FAHRZEUGKÖRPER**
HINGE FOR CONNECTING A HOOD, ESPECIALLY AN ENGINE HOOD, TO A VEHICLE BODY
CHARNIERE DESTINEE A RELIER UN CAPOT, NOTAMMENT UN CAPOT MOTEUR, A LA CARROSSERIE D'UN VEHICULE

(30) Priorität: 06.11.2002 DE 10252285
(43) Veröffentlichungstag der Anmeldung: 07.09.2005
(73) Patentinhaber: Takata-Petri AG, 63743 Aschaffenburg (DE)
(72) Erfinder: KALLISKE, Ingo, 14476 Postdam (DE); MARKFORT, Dieter, 13088 Berlin (DE); FELKE, Markus, 15537 Grünheide (DE)
(74) Vertreter: Baumgärtel, Gunnar
(86) Internationale Anmeldenummer: PCT/DE2003/003597
(87) Internationale Veröffentlichungsnummer: WO 2004/041601

(56) Entgegenhaltungen:
- EP-A- 0 967 128
- WO-A-00/69704
- GB-A- 2 368 562
- GB-A- 2 372 536

## Beschreibung

Die Erfindung betrifft ein Scharnier zur Anbindung einer Klappe, insbesondere einer Motorhaube an einen Fahrzeugkörper gemäß dem Oberbegriff des Anspruchs 1.

Zum Schutz von Fußgängern bei Unfällen mit Kraftfahrzeugen wurden unterschiedliche Maßnahmen vorgeschlagen. Zur Reduzierung der Kopfbelastungen beim Aufprall des Fußgängers auf ein Kraftfahrzeug gibt es verschiedene Ansätze. Derzeit bekannte aktive Systeme zielen auf die Anhebung der Motorhaube im Bereich des Windlaufes ab. Auf diese Weise kann durch die Deformation der Motorhaube Energie des verunfallten Fußgängers abgebaut werden, ohne dass dieser in Kontakt mit unter der Motorhaube liegenden starren Teilen kommt. Die Motorhaube ist aber üblicherweise im Bereich des Windlaufs über ein Scharnier mit dem Fahrzeugkörper verbunden.

Aus der GB-A 2 368 562 ist ein Scharnier zur Anbindung einer Motorhaube an ein Kraftfahrzeug bekannt, bei dem ein Scharnierarm mit einem Scharnierträger über ein Verbindungsteil in Verbindung steht, das aus einem Bolzen und einem den Bolzen umgebenden elastischen Mantel besteht. Zum Lösen des Scharniers in einem Crash-Fall dient ein Airbag, der beim Befüllen mit Gas eine Zugkraft auf das Verbindungsteil ausübt und dieses in radialer Richtung bezogen auf den Scharnierbolzen aus dem Scharnierträger herauszieht.

Aufgabe der vorliegenden Erfindung ist ein Scharnier anzugeben, das einen verbesserten Fußgängerschutz ermöglicht.

Die Aufgabe wird durch ein Scharnier mit den Merkmalen des Anspruchs 1 gelöst.

Danach wird die Aufgabe gelöst durch ein Scharnier zur Anbindung einer Klappe mit mindestens einem am Fahrzeugkörper angeordneten Schamierträger, mindestens einem an der Klappe angeordneten Scharnierarm und mindestens einem Verbindungsteil zur um eine Scharnierachse verschwenkbaren Anbindung des Schamierarms an dem Scharnierträger, wobei die Anbindung des Schamierarms an den Scharnierträger durch das Verbindungsteil bei einem Unfall durch Entfernen des Verbindungsteiles unter Krafteinwirkung entlang der Scharnierachse gelöst wird.

Die Freisetzung des Motorhaubenschamiers kann dabei durch eine komplette Trennung von Motorhaube und Fahrzeugkörper erfolgen, wobei in diesem Falle zusätzlich eine Vorrichtung vorzusehen ist, die die Bewegung der Motorhaube begrenzt. Zum anderen kann die Freisetzung des Motorhaubenscharniers dadurch bewerkstelligt werden, dass nur Teile der Schamierverbindung freigegeben werden, so dass keine vollständige Trennung zwischen Motorhaube und Fahrzeugkörper erfolgt, wobei die gewünschte Bewegungsfreiheit während des Anhebens der Motorhaube dennoch gegeben ist. Durch die nicht getrennte Verbindung kann in diesem Falle ebenfalls die Bewegung der Motorhaube begrenzt werden.

In den Ansprüchen 2 bis 19 sind unterschiedliche Möglichkeiten zur Freisetzung der Klappe, insbesondere der Motorhaube gegenüber dem Fahrzeugkörper ausgeführt. Zu diesen Prinzipien zählen unter anderem die Nutzung eines Airbags zur Freisetzung des Scharniers. Bei der Nutzung von entfernbaren Verbindungsteilen unter Verwendung eines Airbags zur Anhebung der Motorhaube ist es sinnvoll, die Airbagkräfte möglichst schamiemah einzuleiten. Die Expansion des Airbags kann zur Ausübung von Zug- oder Schubkräften auf ein die beiden Scharnierteile verbindendes Verbindungselement, insbesondere einen Bolzen, verwendet werden, wobei dieser Bolzen dann durch die ausgeübten Kräfte aus seinem Eingriff mit mindestens einem der beiden anderen Scharnierteile gebracht wird.

Für den Fall der vollständigen Trennung der Motorhaube im Scharnierbereich vom Fahrzeugkörper sind weitere Maßnahmen zu treffen, damit die Motorhaube nach der Freisetzung am Scharnier kein unkontrolliertes Verhalten zeigt und eventuell eine Gefahr für einen Fußgänger sein könnte. Hier können z.B. Fangbänder eingesetzt werden, wobei das Dehnungsverhalten der Fangbänder sowie zusätzliche im Fangband eingebrachte Reißnähte dazu beitragen können, dass sich die Motorhaube auf einem definierten Kraftniveau möglichst sanft in ihre aufgestellte Endposition bewegt. Auf diese Art und Weise können Schwingungen der Motorhaube im Zusammenhang mit der Aufstellung reduziert werden und der Zeitraum für die Dämpfung nicht vermeidbarer Schwingungen verringert werden.

Durch die vollständige oder teilweise Auflösung der Scharnierverbindung wird eine Bewegung der Motorhaube um einen Drehpunkt an der Fahrzeugfront möglich. Ungewollte Beschädigungen an der Motorhaube, dem Scharnier und den angrenzenden Fahrzeugbereichen können so minimiert werden. Zur Optimierung des Drehpunktes der Motorhaube im vorderen Fahrzeugbereich kann es erforderlich sein, zusätzliche Vorrichtungen vorzusehen, die die Motorhaube im Falle eines Unfalles verschwenkbar machen. Dabei kann der Drehpunkt beispielsweise durch einen Hebelmechanismus so verlegt werden, dass die Motorhaube im gewünschten Bereich frei verschwenkbar ist, ohne an übrigen Fahrzeugbereichen anzustoßen.

Die Erfindung wird im Folgenden anhand der Figuren erklärt werden.

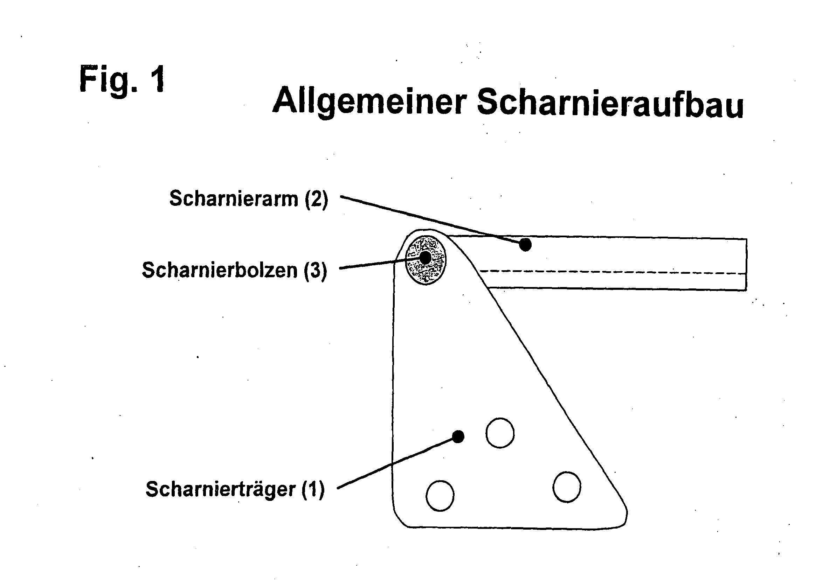

Figur 1 zeigt einen allgemeinen Schamieraufbau, wobei das Scharnier aus einem Scharnierträger 1, der üblicherweise am Fahrzeugkörper angebunden ist, einen Scharnierarm 2, der üblicherweise an der Motorhaube angebunden ist, und ein Verbindungsteil in Form eines Scharnierbolzens 3 aufweist. Der Scharnierarm 2 ist gegenüber dem Scharnierträger 1 um die Achse des Scharnierbolzens 3 verschwenkbar.

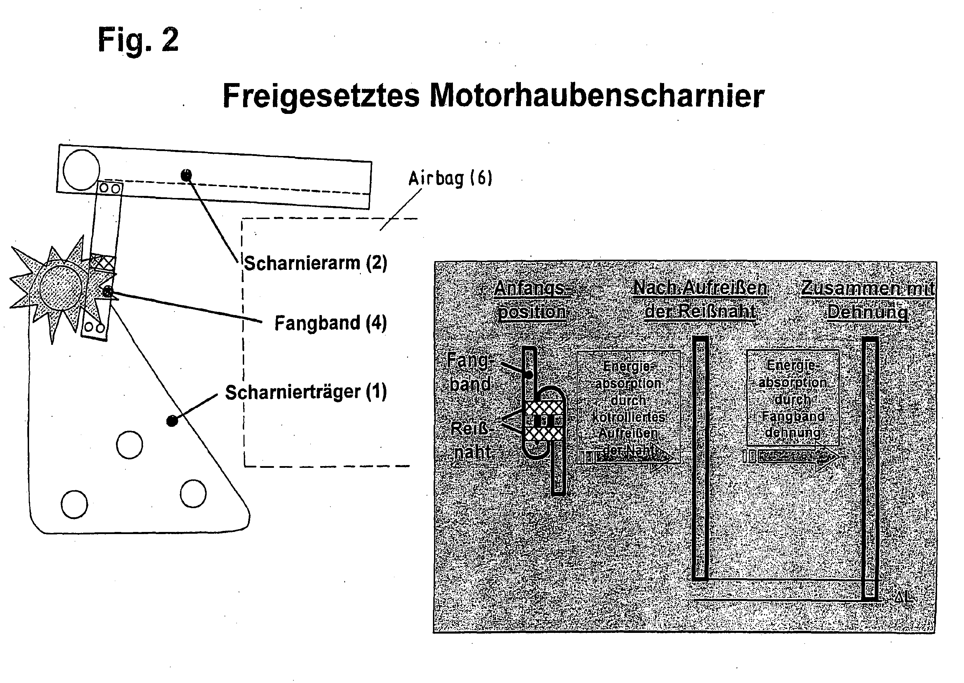

Figur 2 zeigt ein Scharnier in einem Zustand, in dem die Trennung von Motorhaube und Fahrzeugkörper am Scharnier bereits vollzogen ist. Der Scharnierbolzen 3 war hier durch einen Sprengbolzen ersetzt, so dass die Verbindung zwischen dem Scharnierarm 2 und dem Scharnierträger 1 durch das Absprengen des Sprengbolzens getrennt ist. Ein unterhalb der an dem Scharnierarm 2 angebundenen Motorhaube befindlicher Airbag 6 hat in dem in Figur 2 gezeigten Zustand bereits den Scharnierarm vom Scharnierträger abgehoben. Die Bewegung des Schamierarms 2 gegenüber dem Scharnierträger 1 wird durch ein Fangband 4 begrenzt, das zwischen Scharnierträger und Scharnierarm angeordnet ist. Das Fangband weist zum einen Reißnähte auf und ist zum anderen elastisch ausgebildet, so dass die Motorhaube bei der Entfaltung des Airbags 6 relativ sanft in ihren Endzustand überführt wird und so Schwingungen der Motorhaube vermieden werden.

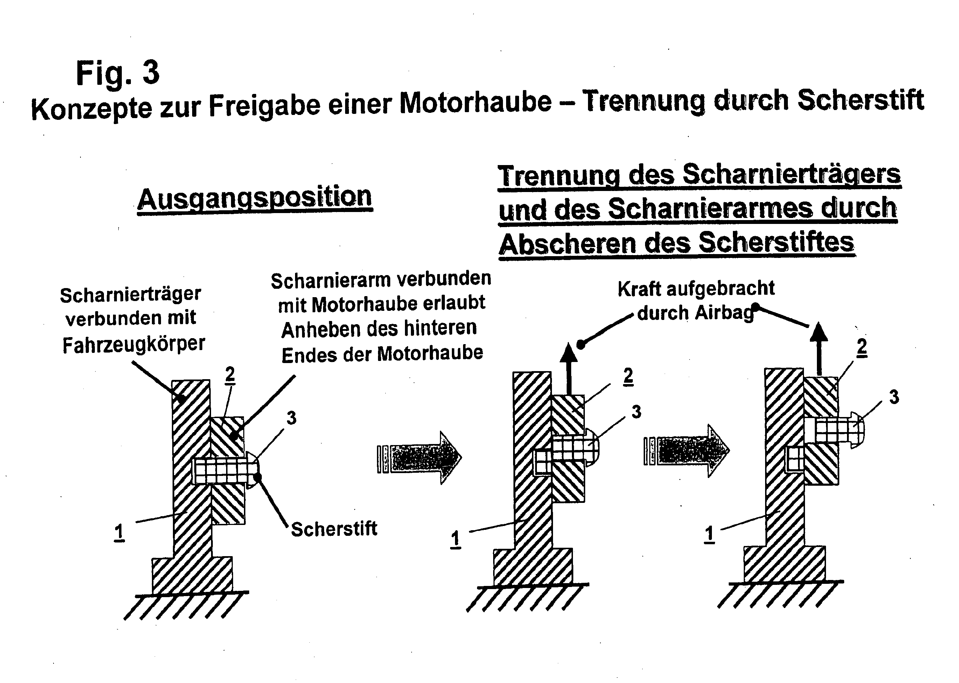

Figur 3 zeigt eine weitere Ausführungsform des Scharniers. Der Scharnierarm 2 ist dabei an dem Scharnierträger 1 über einen Scherstift 3 angebunden. Im Falle der Entfaltung des hier nicht gezeigten Airbags wird der Scherstift 3 durch die vom Airbag ausgeübten Kräfte abgeschert, so dass die Verbindung zwischen dem Scharnierarm 2 und dem Scharnierträger 1 aufgehoben wird. Die Motorhaube kann so in ihre geöffnete Position überführt werden.

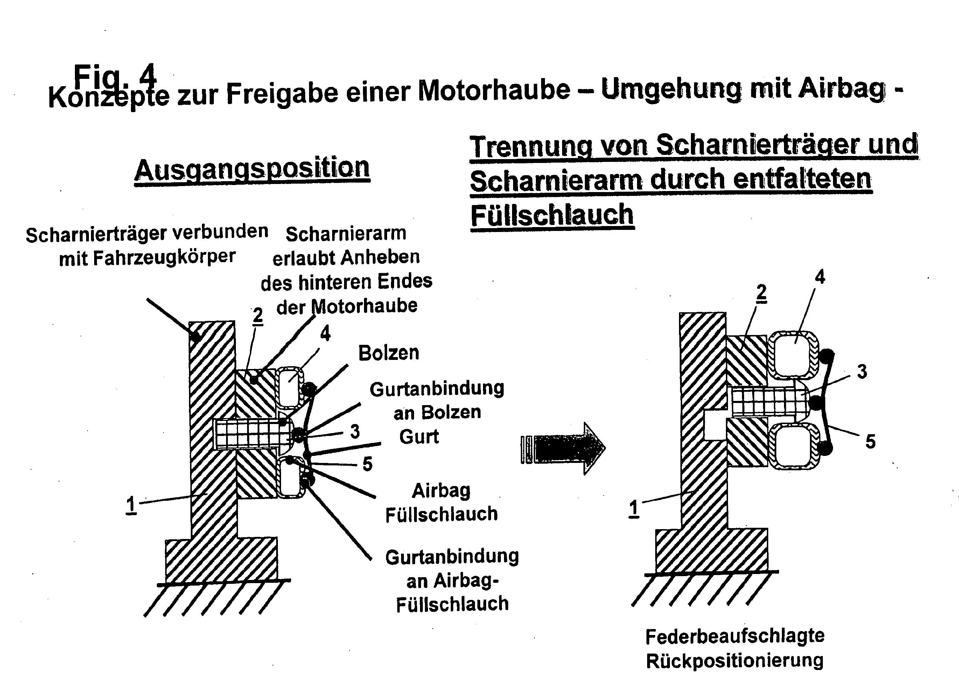

In Figur 4 ist eine erste Ausführungsform des erfindungsgemäßen Scharniers gezeigt. Das Verbindungsteil in Form eines Bolzens 3 ist dabei über ein Übertragungselement 5 mit einem Airbagbypass 4 verbunden. Wird der Airbag gezündet, so expandiert der elastische Airbagbypass 4 und zieht über das Übertragungselement 5 den Bolzen 3 aus seiner ursprünglichen Lage heraus. Scharnierträger 1 und Verbindungsarm 2 werden so von einander gelöst.

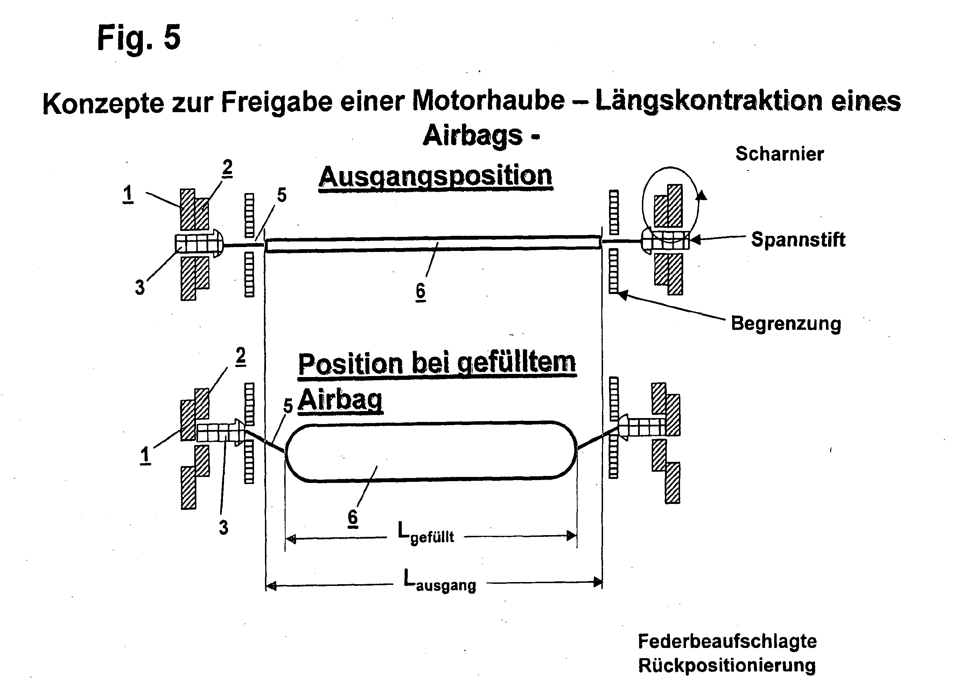

In Figur 5 ist eine zweite Ausführung des erfindungsgemäßen Scharniers gezeigt, in der der Airbag 6 in seinem ursprünglichen Zustand eine größere Länge aufweist, als in seinem aufgeblasenen Zustand. Der Airbag 6 ist über ein Übertragungselement 5 mit dem Bolzen 3 des Scharniers verbunden. Wird der Airbag 6 aufgeblasen, so verkürzt sich seine ursprüngliche Länge und der Bolzen 3 wird über das Übertragungselement 5 aus seiner Verbindung gezogen, wodurch Scharnierarm 2 und Scharnierträger 1 von einander gelöst werden. Der Bolzen 3 kann hier mit einer Feder vorgespannt sein, genauso wie in der in Figur 4 gezeigten Ausführungsform. Bei einem Erschlaffen des Airbags wird der Bolzen so wieder in seine ursprüngliche Position zurück schnappen.

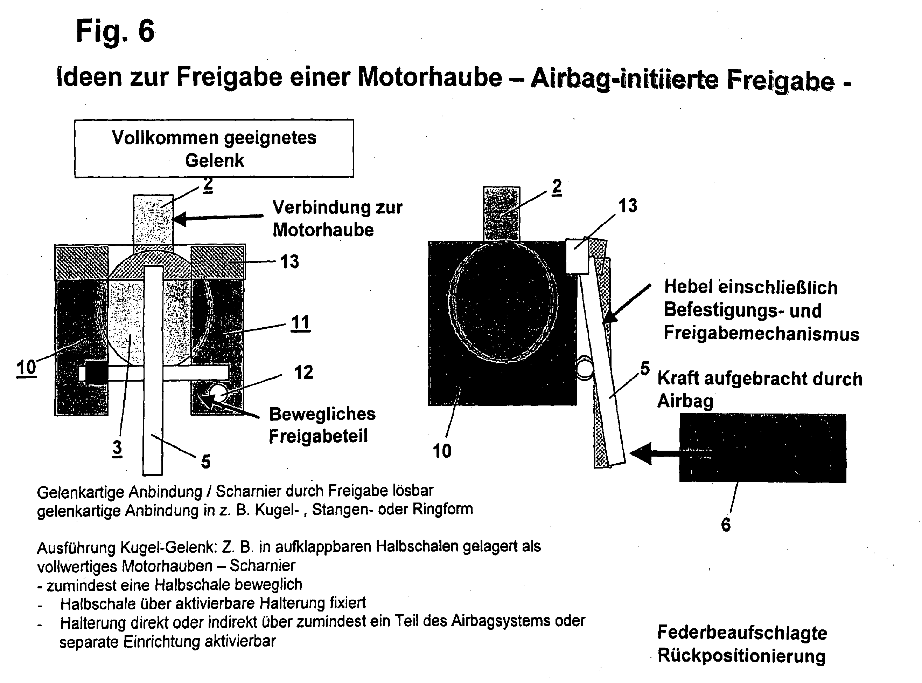

In Figur 6 ist ein Scharnier in Form eines Kugelschamiers gezeigt. Das Verbindungsteil 3 ist hier in Form einer Kugel ausgebildet, die direkt an den Scharnierarm 2 ansetzt. Das kugelförmige Verbindungsteil 3 ist in einem zweiteiligen Scharnierträger aufgenommen, der aus einem festen Teil 10 und einem um eine Achse 12 schwenkbaren Teil 11 besteht. Das kugelförmige Verbindungsteil 3 ist dabei in korrespondierenden Aufnahmen der Scharnierträgerteile 10 und 11 aufgenommen. Die Scharnierträgerteile 10, 11 sind über eine Klammer 13 miteinander verbunden. Wird eine Kraft von einem sich entfaltenden Airbag 6 auf das Übertragungselement 5 ausgeübt, so wird die an dem Übertragungselement 5 angeordnete Klammer 13 von den beiden Scharnierträgerteilen 10, 11 gelöst, so dass das bewegliche Scharnierträgerteil 11 um die Achse 12 verklappt und das kugelförmige Verbindungselement 3 freigibt.

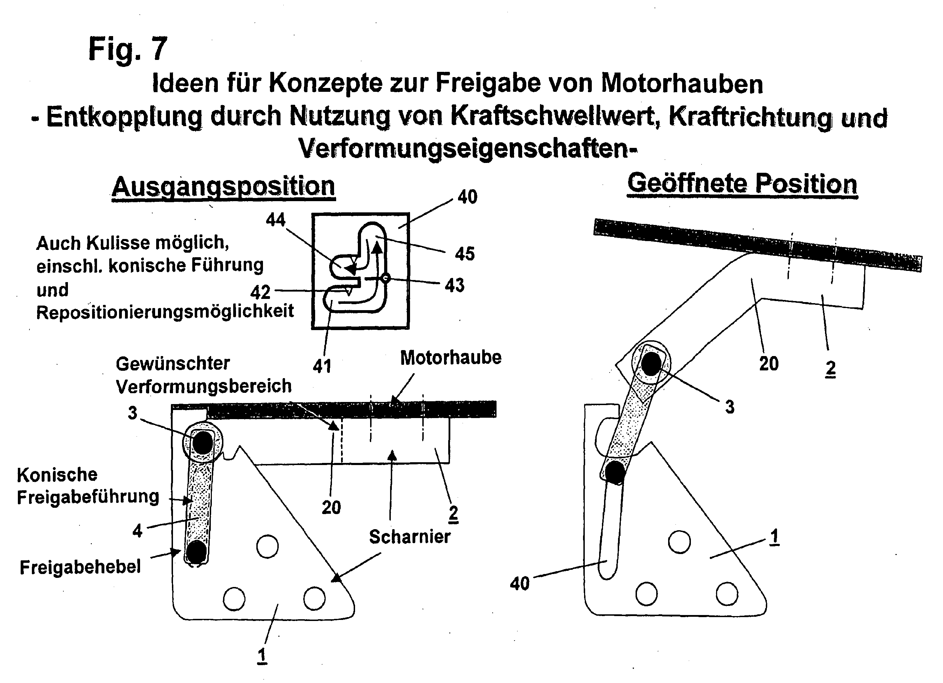

In Figur 7 ist eine Ausführungsform gezeigt, bei der der Scharnierarm 2 einen Verformungsbereich 20 aufweist, in dem sich der Scharnierarm 2 verformen kann. Wird ein unter der Motorhaube angeordneter Airbag gezündet, so verformt sich der Verformungsbereich 20 des Scharnierarms 2, so dass das Verbindungsteil 3 aus einer Aufnahme 100 des Scharnierträgers 1 herauswandert und so die Verbindung freigibt. Das Herauswandern geschieht aufgrund der auf die Aufnahme 100 projizierten Verkürzung des Schamierarms 2. Die Öffnungsbewegung wird über einen Hebel 4 kontrolliert, der sich in einer Kulisse 40 an dem Scharnierträger 1 bewegt. Dadurch lässt sich ein definiertes Öffnungsverhalten erreichen. Im oberen Bereich der Figur 7 ist eine weitere mögliche Kulissenführung, beispielsweise für das Verbindungsteil 3 gezeigt. In einer Ausgangsposition liegt das Verbindungsteil 3 im Bereich 41 der Kulissenführung hinter einem Arretierelement 42 festgeklemmt. Wird ein Airbag entfaltet, so wandert das Teil 3 auf dem durch den Pfeil eingezeichneten Weg vorbei an einer Einwegklappe 43 in die Öffnungsstellung 45. Nach dem Unfall kann die Klappe vorn Bereich 45 durch Herunterdrücken wiederum vorbei an der Einwegklappe 43 in eine Transportposition 44 gebracht werden, in der eine Fahrt zur nächsten Werkstatt möglich ist.

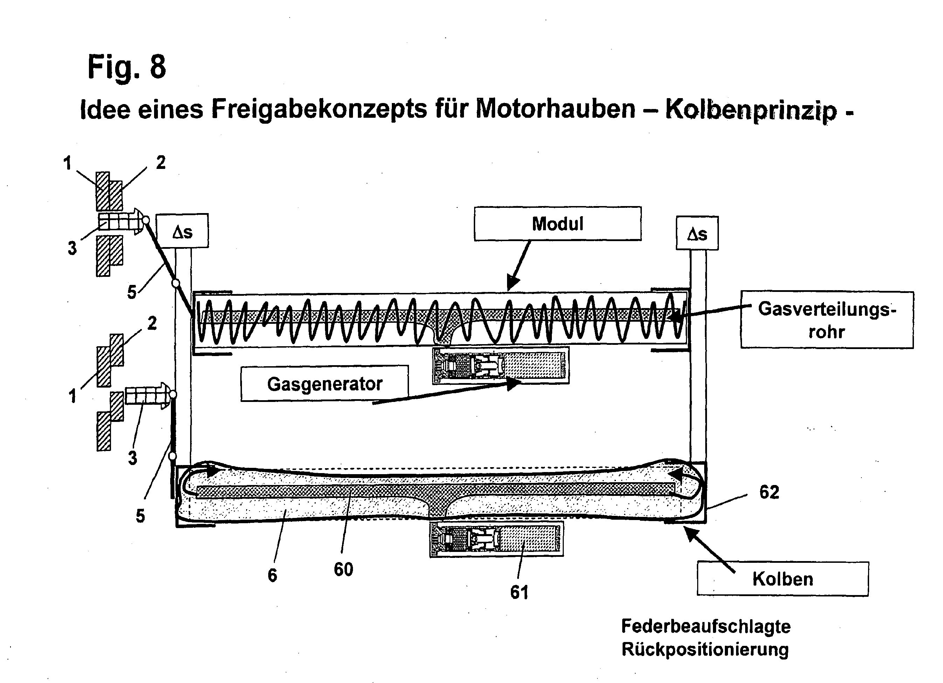

In Figur 8 ist eine weitere erfindungsgemäße Ausführungsform gezeigt, in der die Entfaltung eines Airbags 6 über ein als Hebel 6 ausgebildetes Übertragungselement wiederum auf den Bolzen 3 derart einwirkt, dass bei einer Entfaltung des Airbags 6 der Bolzen aus-seiner Verbindung herausgezogen wird. Der Airbag arbeitet hier in Form eines Kolbens und grenzt an kolbenförmige Kappen 62 an.

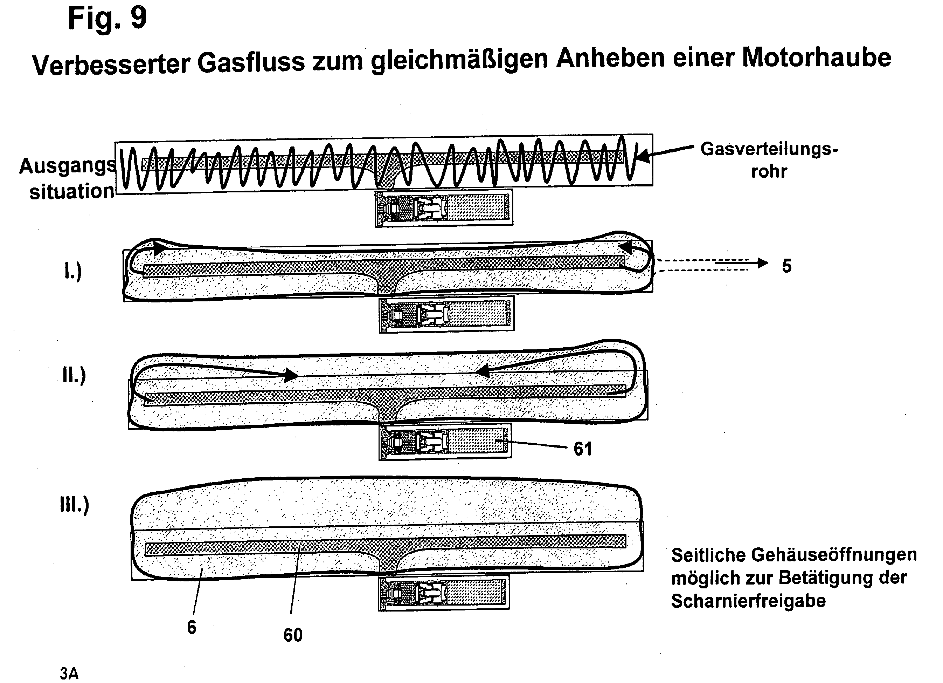

In Figur 9 ist eine besondere Ausführung eines geeigneten Gassacks 6 gezeigt. Der Gassack ist dabei im Fahrzeug so positioniert, dass er sich in unmittelbarer Nähe zu den Scharnieren der Motorhaube befindet. In dem Gassack 6 ist eine Gaslanze 60 angeordnet, deren Austrittsöffnungen ebenfalls in unmittelbarer Nähe zu den Scharnieren angeordnet sind. Wird vom Gasgenerator 61 ein Gas zur Entfaltung des Gassacks 6 generiert, so wird wie unter I. gezeigt zunächst der Gassackbereich aufgeblasen, der sich im Bereich der Scharniere befindet. Erst danach erfolgt eine Entfaltung des übrigen Gassacks. Dadurch wird erreicht, dass zunächst im Bereich der Scharniere Vorkräfte auftreten, die eine Lösung des Scharniers ermöglichen und erst dann wird die übrige Motorhaube angehoben. Auf diese Weise wird verhindert, dass die Motorhaube in unnötige Schwingungen gerät.

## Patentansprüche

1. Scharnier zur Anbindung einer Klappe, insbesondere einer Motorhaube, an einen Fahrzeugkörper mit mindestens einem am Fahrzeugkörper angeordneten Scharnierträger (1), mindestens einem an der Klappe angeordneten Scharnierarm (2) und mindestens einem Verbindungsteil (3) zur um eine Scharnierachse verschwenkbaren Anbindung des Scharnierarms (2) an den Scharnierträger (1),
**dadurch gekennzeichnet,**
**dass** bei einem Unfall die Anbindung des Schamierarms (2) an den Scharnierträger (1) durch Entfernen des Verbindungsteils (3) durch Krafteinwirkung entlang der Scharnierachse gelöst wird wobei ein Airbag zur Freisetzung des Scharniers benutzt wird.

2. Scharnier nach Anspruch 1, **dadurch gekennzeichnet, dass** das Verbindungsteil (3) als Scherbolzen ausgebildet ist.

3. Scharnier nach Anspruch 1 oder 2, **dadurch gekennzeichnet, dass** das Verbindungsteil (3) in mindestens einer Aufnahme des Scharnierarms (2) und mindestens einer Aufnahme des Scharnierträgers (1) geführt ist und bei einem Unfall aus mindestens einer Aufnahme entfernt wird.

4. Scharnier nach Anspruch 3, **dadurch gekennzeichnet, dass** das Verbindungsteil (3) als Bolzen ausgebildet ist, der aus mindestens einer der Aufnahmen herausgezogen wird.

5. Scharnier nach Anspruch 3 oder 4, **dadurch gekennzeichnet, dass** mindestens ein Betätigungsmittel zur Betätigung des Verbindungsteils (3) bei einem Unfall vorgesehen ist.

6. Scharnier nach Anspruch 5, **dadurch gekennzeichnet, dass** das Betätigungsmittel ein pyrotechnisches Element umfasst.

7. Scharnier nach Anspruch 5 oder 6, **dadurch gekennzeichnet, dass** das Betätigungsmittel ein aufblasbarere Gassack (6) und/oder ein gasleitendes Element (4) ist.

8. Scharnier nach Anspruch 7, **dadurch gekennzeichnet, dass** der Gassack (6) und/oder das gasleitende (4) Element über mindestens ein Übertragungselement (5) auf das Verbindungsteil (3) einwirkt.

9. Scharnier nach Anspruch 8, **dadurch gekennzeichnet, dass** das Übertragungselement (5) als Hebel ausgebildet ist.

10. Scharnier nach einem der Ansprüche 7 bis 9, **dadurch gekennzeichnet, dass** der Gassack (6) und/oder das gasleitende Element (4) beim Befüllen mit Gas aufgrund seiner Expansion einen Druck oder einen Zug auf das Verbindungsteil (3) und/oder das Übertragungselement (5) ausübt.

11. Scharnier nach einem der vorstehenden Ansprüche, **dadurch gekennzeichnet, dass** Verbindungsteil (3) kugelförmig ausgebildet ist und der Scharnierträger (1) mindestens eine mit dem Verbindungsteil (3) korrespondierende Aufnahme aufweist, die derart ausgebildet ist, dass sie das Verbindungsteil (3) bei einem Unfall freigibt.

12. Scharnier nach Anspruch 11, **dadurch gekennzeichnet, dass** der Scharnierträger (1) mindestens ein bewegliches Scharnierträgerteil (11) aufweist, das bei einem Unfall gegenüber mindestens einem festen Scharnierträgerteil (10) derart bewegt wird, dass das darin aufgenommene Verbindungsteil (3) freikommt.

13. Scharnier nach einem der vorstehenden Ansprüche, **dadurch gekennzeichnet, dass** der Scharnierarm (2) einen Deformationsbereich (20) zur gezielten Deformation des Scharnierarms (2) bei einem Unfall aufweist.

14. Scharnier nach Anspruch 13, **dadurch gekennzeichnet, dass** das Verbindungsteil (3) durch die Deformation des Scharnierarms (2) außer Eingriff mit dem Scharnierträger (1) kommt.

15. Scharnier nach einem der vorstehenden Ansprüche, **dadurch gekennzeichnet, dass** mindestens ein Begrenzungsmittel zur Begrenzung der Relativbewegung zwischen Scharnierträger (1) und Scharnierarm (2) angeordnet ist.

16. Scharnier nach Anspruch 15, **dadurch gekennzeichnet, dass** das Begrenzungsmittel ein Fangband und/oder ein in einer Kulisse (40) geführter Hebel (4) ist.

17. Scharnier nach Anspruch 7 oder einem der Ansprüche 8 bis 16, soweit rückbezogen auf Anspruch 7, **dadurch gekennzeichnet, dass** Gassackbereiche unmittelbar an dem Scharnier angeordnet sind.

18. Scharnier nach Anspruch 17, **dadurch gekennzeichnet, dass** sich der Gassack (6) bei seiner Entfaltung zuerst in den an dem Scharnier angeordneten Bereichen entfaltet.

19. Scharnier nach Anspruch 17 oder 18, **dadurch gekennzeichnet, dass** ein Gasleitsystem (60), insbesondere eine Gaslanze, im Inneren des Gassacks (6) angeordnet ist, die das zur Entfaltung dienende Gas in die an dem Scharnier angeordneten Gassackbereiche leitet.

## Claims

1. A hinge for connecting a hood, especially an engine hood, to a vehicle body, having at least one hinge carrier (1) arranged on the vehicle body, at least one hinge arm (2) arranged on the hood and at least one connecting part (3) for the pivotable connection of the hinge arm (2) to the hinge carrier (1) about an axis of the hinge,
**characterized in that**
the connection of the hinge arm (2) to the hinge carrier (1) is released in the event of an accident by removal of the connecting part (3) by application of a force along the hinge axis, wherein an airbag is used for the release of the hinge.

2. The hinge as claimed in claim 1, **characterized in that** the connecting part (3) is designed as a shear bolt.

3. The hinge as claimed in claim 1 or 2, **characterized in that** the connecting part (3) is guided in at least one socket on the hinge arm (2) and in at least one socket on the hinge carrier (1) and, in the event of an accident, is removed from at least one socket.

4. The hinge as claimed in claim 3, **characterized in that** the connecting part (3) is designed as a bolt which is pulled out of at least one of the sockets.

5. The hinge as claimed in claim 3 or 4, **characterized in that** at least one actuating means is provided for actuating the connecting part (3) in the event of an accident.

6. The hinge as claimed in claim 5, **characterized in that** the actuating means comprises a pyrotechnic element.

7. The hinge as claimed in claim 5 or 6, **characterized in that** the actuating means is an inflatable airbag (6) and/or a gas-conducting element (4).

8. The hinge as claimed in claim 7, **characterized in that** the airbag (6) and/or the gas-conducting element (4) acts on the connecting part (3) via at least one transmission element (5).

9. The hinge as claimed in claim 8, **characterized in that** the transmission element (5) is designed as a lever.

10. The hinge as claimed in one of claims 7 to 9, **characterized in that**, on filling with gas, the airbag (6) and/or the gas-conducting element (4), owing to its expansion, exerts a push or a pull on the connecting part (3) and/or the transmission element (5).

11. The hinge as claimed in one of the preceding claims, **characterized in that** the connecting part (3) is of spherical design, and the hinge carrier (1) has at least one socket which corresponds with the connecting part (3) and is designed in such a manner that it releases the connecting part (3) in the event of an accident.

12. The hinge as claimed in claim 11, **characterized in that** the hinge carrier (1) has at least one moveable hinge carrier part (11) which, in the event of an accident, is moved in relation to at least one fixed hinge carrier part (10) in such a manner that the connecting part (3) accommodated therein comes free.

13. The hinge as claimed in one of the preceding claims, **characterized in that** the hinge arm (2) has a deformation region (20) for the specific deformation of the hinge arm (2) in the event of an accident.

14. The hinge as claimed in claim 13, **characterized in that** the connecting part (3) is disengaged from the hinge carrier (1) by deformation of the hinge arm (2).

15. The hinge as claimed in one of the preceding claims, **characterized in that** at least one limiting means is arranged for limiting the relative movement between the hinge carrier (1) and hinge arm (2).

16. The hinge as claimed in claim 15, **characterized in that** the limiting means is a rebound strap and/or a lever (4) guided in a coulisse (40).

17. The hinge as claimed in claim 7 or one of the claims 8 to 16, so far referred back to claim 7, **characterized in that** airbag regions are arranged directly on the hinge.

18. The hinge as claimed in claim 17, **characterized in that** the airbag (6), when deployed, is first of all deployed in the regions arranged on the hinge.

19. The hinge as claimed in claim 17 or 18, **characterized in that** a gas-conducting system (60), in particular a gas lance, is arranged in the interior of the airbag (6), said lance conducting the gas used for the deployment into the airbag regions arranged on the hinge.

## Revendications

1. Charnière destinée à relier un capot, notamment un capot moteur, à la carrosserie d'un véhicule avec au moins un support (1) de charnière disposé sur la carrosserie du véhicule, au moins un bras de charnière (2) disposé sur le capot et au moins une partie de liaison (3) pour relier le bras de charnière (2) au support (1) de charnière, de manière pivotante autour d'un axe de charnière,
**caractérisée en ce**
**qu'**en cas d'accident, la liaison entre le bras de charnière (2) et le support (1) de charnière est détachée par retrait de la partie de liaison (3) sous l'effet de forces le long de l'axe de charnière, un airbag étant utilisé pour libérer la charnière.

2. Charnière selon la revendication 1, **caractérisée en ce que** la partie de liaison (3) est réalisée comme un boulon de cisaillement.

3. Charnière selon la revendication 1 ou 2, **caractérisée en ce que** la partie de liaison (3) est guidée dans au moins un logement du bras de charnière (2) et au moins un logement du support (1) de charnière et en cas d'accident est retirée d'au moins un logement.

4. Charnière selon la revendication 3, **caractérisée en ce que** la partie de liaison (3) est réalisée comme un boulon qui est extrait d'au moins l'un des logements.

5. Charnière selon la revendication 3 ou 4, **caractérisée en ce qu'**au moins un moyen d'actionnement est prévu pour l'actionnement de la partie de liaison (3) en cas d'accident.

6. Charnière selon la revendication 5, **caractérisée en ce que** le moyen d'actionnement comporte un élément pyrotechnique.

7. Charnière selon la revendication 5 ou 6, **caractérisée en ce que** le moyen d'actionnement est un sac de gaz (6) pouvant être gonflé et/ou un élément conduisant du gaz.

8. Charnière selon la revendication 7, **caractérisée en ce que** le sac de gaz (6) et/ou l'élément conduisant du gaz (4) agit par le biais d'au moins un élément de transmission (5) sur la partie de liaison (3).

9. Charnière selon la revendication 8, **caractérisée en ce que** l'élément de transmission (5) est réalisé comme un levier.

10. Charnière selon l'une quelconque des revendications 7 à 9, **caractérisée en ce que** le sac de gaz (6) et/ou l'élément conduisant du gaz (4) exerce lors du remplissage en gaz une pression ou une traction sur la partie de liaison (3) et/ou l'élément de transmission (5) en raison de son expansion.

11. Charnière selon l'une quelconque des revendications précédentes, **caractérisée en ce que** la partie de liaison (3) est réalisée comme une sphère et le support (1) de charnière présente au moins un logement correspondant à la partie de liaison (3) qui est réalisé de telle sorte qu'il libère la partie de liaison (3) en cas d'accident.

12. Charnière selon la revendication 11, **caractérisée en ce que** le support (1) de charnière présente au moins un élément de support de charnière (11) mobile qui est déplacé en cas d'accident par rapport à au moins un élément de support de charnière (10) fixe de telle sorte que la partie de liaison (3) logée dedans se libère.

13. Charnière selon l'une quelconque des revendications précédentes, **caractérisée en ce que** le bras de charnière (2) présente une zone de déformation (20) pour la déformation ciblée du bras de charnière (2) en cas d'accident.

14. Charnière selon la revendication 13, **caractérisée en ce que** la partie de liaison (3) se désengage avec le support (1) de charnière par la déformation du bras de charnière (2).

15. Charnière selon l'une quelconque des revendications précédentes, **caractérisée en ce qu'**au moins un moyen de limitation pour limiter le mouvement relatif est disposé entre le support (1) de charnière et le bras de charnière (2).

16. Charnière selon la revendication 1 S, **caractérisée en ce que** le moyen de limitation est une bande d'arrêt et/ou un levier (4) guidé dans une coulisse (40).

17. Charnière selon la revendication 7 ou l'une quelconque des revendications 8 à 16, dans la mesure où relative à la revendication 7, **caractérisée en ce que** des zones de sac de gaz sont disposées directement sur la charnière.

18. Charnière selon la revendication 17, **caractérisée en ce que** le sac de gaz (6) se déploie lors de son déploiement tout d'abord dans les zones disposées sur la charnière.

19. Charnière selon la revendication 17 ou 18, **caractérisée en ce qu'**un système de conduite de gaz (60), en particulier une lance à gaz, est disposée à l'intérieur du sac de gaz (6), laquelle conduit le gaz servant au déploiement dans les zones de sac de gaz disposées sur la charnière.
